# EUROPEAN PATENT APPLICATION

(11) **EP 4 757 125 A1**
(43) Date of publication of application: **10.06.2026**
(21) Application number: 24217703.8
(22) Date of filing: 05.12.2024
(51) Int. Cl.: H02K 1/20, H02K 9/19, H02K 9/197, H02K 16/00

(54) **STATOR ASSEMBLY FOR A DUAL ROTOR ELECTRIC MACHINE FOR A DRIVE UNIT OF A VEHICLE, DUAL ROTOR ELECTRIC MACHINE FOR A DRIVE UNIT OF A VEHICLE, AND COOLANT DISTRIBUTION SLEEVE FOR A STATOR ASSEMBLY**

(71) Applicant: Volvo Car Corporation, 405 31 Göteborg (SE)
(72) Inventor: SILVA PEREIRA, Luiz Filipe, 40531 Göteborg (SE); STEN, Erik, 40531 Göteborg (SE)
(74) Representative: Kransell & Wennborg KB

(57) **Abstract**

The disclosure relates to a stator assembly (20) for a dual rotor electric machine (14) for a drive unit of a vehicle. The stator assembly (20) comprises a first stator (22) extending along a first axis and a second stator (32) extending along the first axis. The second stator (32) is arranged radially inside the first stator (22). The first stator (22) and the second stator (32) are rotationally fixed with respect to one another. A plurality of coolant channels (44) extending along the first axis are interposed between the first stator (22) and the second stator (32). Additionally, a dual rotor electric machine (14) for a drive unit of a vehicle is described. Furthermore, a coolant distribution sleeve (42) for a stator assembly (20) is shown.

## Description

### TECHNICAL FIELD

The present disclosure relates to a stator assembly for a dual rotor electric machine for a drive unit of a vehicle.

Additionally, the present disclosure is directed to a dual rotor electric machine for a drive unit of a vehicle.

Furthermore, the present disclosure is directed to a coolant distribution sleeve for a stator assembly.

### BACKGROUND

The ongoing development in the field of electric machines for battery electric vehicles shows that dual rotor electric machines offer several technological advantages with respect to, e.g., single rotor electric machines. Generally, dual rotor electric machines combine an inner rotor and an outer rotor in one electric machine. These types of machines are known for their potential of providing high power to drive the vehicle and for their compactness.

### SUMMARY

It is therefore an objective of the present disclosure to further improve dual rotor electric machines. In particular, a power density of a dual rotor electric machine shall be increased, i.e. the amount of power that can be provided by a machine having a certain volume.

The problem is at least partially solved or alleviated by the subject matter of the independent claims of the present disclosure, wherein further examples are incorporated in the dependent claims.

### SE:TOP

According to a first aspect, there is provided a stator assembly for a dual rotor electric machine for a drive unit of a vehicle. The stator assembly comprises a first stator extending along a first axis and a second stator extending along the first axis. The second stator is arranged radially inside the first stator. The first stator and the second stator are rotationally fixed with respect to one another. A plurality of coolant channels extending along the first axis are interposed between the first stator and the second stator. In this context, the first stator may be ring-shaped, wherein a middle axis of the ring-shape coincides with the first axis. Moreover, the first stator may be configured for interacting with a first rotor arranged radially outside the first stator. The second stator may be ring-shaped as well, wherein a middle axis of the ring-shape coincides with the first axis. In this case, the first stator and the second stator are arranged concentrically. Moreover, the second stator may be configured for interacting with a second rotor arranged radially inside the second stator. Further, the second stator being arranged radially inside the first stator may be understood in that the second stator has a smaller diameter than the first stator. In other words, the first stator may be regarded as a radially outer stator and the second stator may be regarded as a radially inner stator. As has already been mentioned before, such a stator assembly is compact. Thus, a dual rotor electric machine using such a stator assembly may as well be compact. The plurality of coolant channels extending along the first axis means that the coolant channels run at least partially in parallel with the first axis, i.e. axially. The plurality of the coolant channels allows to dissipate heat away from the first stator and the second stator. More precisely, a coolant may be guided through the plurality of coolant channels. Using the coolant, the first stator and the second stator may be cooled. Since the coolant channels are arranged close to the first stator and to the second stator, the cooling may be achieved in an efficient manner. Cooling the stator assembly may prevent the stator assembly from overheating during operation. Consequently, the service life of the stator assembly and, thus, of the dual rotor electric machine using the stator assembly may be enhanced. Furthermore, due to the cooling, the stator assembly may be operated at a comparatively high performance. Thus, the use of the plurality of coolant channels may lead to a higher achievable torque and power density of the stator assembly and, thus, of the dual rotor electric machine using the stator assembly. Thus, the stator assembly may be cost efficient because no further components may be needed to increase the torque and power density, while using the compact design of the stator assembly.

In an example, the dual rotor electric machine is a dual rotor surface permanent magnet machine.

According to an example, the plurality of coolant channels may be arranged in an equally distributed manner. This means that a circumferential distance between neighboring coolant channels is the same for each pair of neighboring coolant channels. Consequently, the cooling effect also is evenly distributed. In other words, a uniform cooling effect is achieved. This leads to efficient and stable cooling. Thus, the stator assembly or an electric machine comprising the stator assembly may be operated at high performance.

According to an example, a first group of coolant channels out of the plurality of coolant channels is arranged radially outside a second group of coolant channels out of the plurality of coolant channels. In other words, the second group of coolant channels may be located closer to the first axis, while the first group of coolant channels may be located further away from the first axis. It is noted that the first group of coolant channels and the second group of coolant channels may be overlap-free. This radial arrangement of the first group and the second group may be seen as a dual layer cooling jacket. In other words, the first group of coolant channels may be radially closer to the first stator, while the second group of coolant channels may be radially closer to the second stator. This may lead to an efficient cooling of the first stator and the second stator.

According to an example, the coolant channels of the first group and the coolant channels of the second group are at least pair-wise fluidically connected at a first axial end and fluidically coupled to a respectively associated port at a second axial end. The second axial end is opposite to the first axial end. Thus, within each pair of fluidically connected coolant channels, the coolant may be guided from a port into one of the coolant channels of the first group or the second group and from there into a coolant channel of the respective other one of the first group and the second group. Subsequently, the coolant may be discharged via a port. The port at the second axial end may be formed as an opening for inlet or outlet of a coolant such that the coolant either runs from the first group of coolant channels to the second group of coolant channels that are at least pair-wise fluidically connected or from the second group of coolant channels to the second group of coolant channels that are at least pair-wise fluidically connected. By at least pair-wise fluidically connecting the first group and the second group, the cooling of the first stator and the second stator may be even further improved. This is because a coolant running through the first group or the second group will also run through the respective other one of the first group or second group. This means that the heat transfer away from the first stator and the second stator may be enhanced, as the coolant is guided in a defined and controlled manner through the first group of coolant channels and the second group of coolant channels. Moreover, the at least pair-wise fluidic connection may increase the coolant circulation efficiency.

According to an example, the stator assembly further comprises a ring-shaped end piece radially interposed between the first stator and the second stator at the first axial end of the first stator and the second stator and axially delimiting the plurality of coolant channels. The ring-shaped end piece may be located radially between the first stator and the second stator. The ring-shaped end piece may facilitate regulating the heat distribution within the stator assembly by guiding the flow of the coolant. By delimiting the plurality of coolant channels, the ring-shaped end piece may serve as a physical barrier or wall for the coolant channels. In more detail, an outer surface of the ring-shaped end may contact the inner side of the first stator and the outer side of the second stator in a fluid-tight manner. Thus, the plurality of coolant channels are reliably delimited. Further, the structural stability of the stator assembly may be improved because the ring-shaped end piece allows to support the first stator and the second stator on one another. The delimiting of the plurality of coolant channels in axial direction may further lead to an improved cooling. This is because the risk of coolant leaks may be reduced, enhancing the overall reliability and product lifetime of the stator assembly.

According to an example, the stator assembly further comprises a coolant inlet port fluidically connected to the first group of coolant channels and a coolant outlet port fluidically connected to the second group of coolant channels. The inlet port fluidically connected to the first group of coolant channels may be formed as an opening for inlet of the coolant. This means that the inlet port may allow introducing coolant into the first group of coolant channels, ensuring a continuous and reliable provision of coolant. The outlet port fluidically connected to the second group of coolant channels may be formed as an opening for outlet of the coolant. This means that the outlet port may allow discharging coolant from the second group of coolant channels, ensuring a continuous and reliable coolant discharge. In simplified words, the coolant may flow from the inlet port through the first group of coolant channels, subsequently through the second group of coolant channels, and may exit the stator assembly through the outlet port. Alternatively, the coolant may flow from the inlet port through the first group of coolant channels, subsequently passes through the ring-shaped end piece or passes by the ring-shaped end piece, then may flow through the second group of coolant channels, and may exit the stator assembly through the outlet port. It is noted that since the coolant flows through coolant channels of both the first group and the second group, technically also the second group is fluidically connected to the coolant inlet. The use of the coolant inlet port and the coolant outlet port may facilitate a continuous and efficient coolant circulation through the plurality of coolant channels. Thus, the heat dissipation may be improved.

According to an example, a second axial end of the first stator and a second axial end of the second stator are mechanically connected to a support part. The support part may be seen as component for supporting and/or mounting the first stator and the second stator. The support part may ensure a strong and permanent connection between the first stator and the second stator. This has the effect that the structural stability of the stator assembly may be further improved. It is noted that the mechanical connection may be fluid-tight, reducing the risk of coolant leaks. Therefore, the product lifetime of the first stator and the second stator may be improved. Moreover, mechanically connecting the first stator and the second stator to the support part may reduce vibrations occurring during operation of the stator assembly. Thus, a more uniform and reliable operation of the stator assembly may be achieved. Optionally, the support part may also serve as a support for the first rotor and the second rotor.

In an example, the mechanical connection between the first stator, the second stator and the support part may be achieved by using a mechanical fastening means, e.g. screws or bolts. Mechanical fastening means may be located at predefined positions at the second axial end of the first stator and the second stator as well as on the support part.

According to an example, the first group of coolant channels is formed by a coolant distribution sleeve and the first stator. Additionally or alternatively, the second group of coolant channels is formed by the coolant distribution sleeve and the second stator. This means that there are three alternatives. In the first alternative, the first group of coolant channels is formed by the coolant distribution sleeve and the first stator. In the second alternative, the second group of coolant channels is formed by the coolant distribution sleeve and the second stator. In the third alternative, the first group of coolant channels is formed by the coolant distribution sleeve and the first stator, and, additionally, the second group of coolant channels is formed by the coolant distribution sleeve and the second stator. In this context, the coolant distribution sleeve may be understood as a tubular part having a circular cross-section. The coolant distribution sleeve separates the coolant channels of the first group from the coolant channels of the second group. In an example, the coolant channels of the first group are formed by a radially outer side of the coolant distribution sleeve and the first stator. The coolant channels of the second group may be formed by a radially inner side of the coolant distribution sleeve and the second stator. Thus, the coolant channels both of the first group and of the second group may be formed in a simple and reliable manner. The coolant distribution sleeve may serve as an additional component for heat dissipation. Thus, the cooling of the stator assembly may be further improved. Further, the structural stability of the stator assembly may be further enhanced because the coolant distribution sleeve may contribute to the mechanical stability and strength of the stators. In other words, the coolant distribution sleeve may serve as a supporting element.

In an example, the coolant distribution sleeve comprises non-ferromagnetic material or is made of non-ferromagnetic material. Such material may be aluminum and/or titanium. Thus, the coolant distribution sleeve does not interact with magnetic fields that may be generated by the first stator and/or the second stator. This implies that the coolant distribution sleeve does not cause any magnetic losses.

In an example, the second axial end of the first stator, the second axial end of the second stator and the second axial end of the coolant distribution sleeve are mechanically connected to the support part. This has the effect that the structural stability of the stator assembly may be even further improved. It is noted that the mechanical connection may be fluid-tight, reducing the risk of coolant leaks. Therefore, the product lifetime of the first stator, the second stator and the coolant distribution sleeve may be improved. Moreover, mechanically connecting the first stator, the second stator and the coolant distribution sleeve to the support part may further reduce vibrations occurring during operation of the stator assembly. Thus, an even more uniform and reliable operation of the stator assembly may be achieved.

According to an example, the coolant distribution sleeve comprises a plurality of grooves provided on a radial outer side of the coolant distribution sleeve, extending axially, and forming the coolant channels of the first group of coolant channels. Additionally or alternatively, the coolant distribution sleeve comprises a plurality of grooves provided on a radial inner side of the coolant distribution sleeve, extending axially, and forming the coolant channels of the second group of coolant channels. This means that there are three alternatives. In the first alternative, the coolant distribution sleeve comprises a plurality of grooves provided on a radial outer side of the coolant distribution sleeve, extending axially, and forming the coolant channels of the first group of coolant channels. In the second alternative, the coolant distribution sleeve comprises a plurality of grooves provided on a radial inner side of the coolant distribution sleeve, extending axially, and forming the coolant channels of the second group of coolant channels. In the third alternative, the coolant distribution sleeve comprises a plurality of grooves provided on a radial outer side of the coolant distribution sleeve, extending axially, and forming the coolant channels of the first group of coolant channels, and the coolant distribution sleeve further comprises a plurality of grooves provided on a radial inner side of the coolant distribution sleeve, extending axially, and forming the coolant channels of the second group of coolant channels. It is noted that the grooves may be at least partially evenly or unevenly distributed over a circumference of the coolant distribution sleeve. The plurality of grooves provided on the radial outer side of the coolant distribution sleeve may allow coolant to flow efficiently over the outer side of the coolant distribution sleeve. The plurality of grooves provided on the radial inner side of the coolant distribution sleeve may allow coolant to flow efficiently over the inner side of the coolant distribution sleeve. The plurality of grooves provided on the radial outer and/or inner side of the coolant distribution sleeve may lead to an improved coolant circulation. This is because the plurality of grooves may be seen as a predefined guidance for the coolant through the grooves on the radial outer side and/or on the radial inner side. This may enable a more uniform and more efficient cooling. At the same time, such grooves are simple from a structural point of view and from a manufacturing point of view.

According to an example, the coolant distribution sleeve comprises a plurality of radial channel segments, each radial channel segment fluidically interconnecting a coolant channel of the first group of coolant channels and a radially adjacent coolant channel of the second group of coolant channels. In this context, radial channel segments may be understood as holes or recesses in the coolant distribution sleeve. This has the effect that the coolant circulation may be further improved. Moreover, such radial channel segments provide a simple and reliable connection between a coolant channel of the first group of coolant channels and a radially adjacent coolant channel of the second group of coolant channels.

According to an example, the coolant distribution sleeve comprises a first tangential locking feature and the first stator comprises a tangential counter-locking feature. The coolant distribution sleeve and the first stator are rotationally fixed with respect to one another via the first tangential locking feature and the tangential counter-locking feature of the first stator. Additionally or alternatively, the coolant distribution sleeve comprises a second tangential locking feature and the second stator comprises a tangential counter-locking feature. The coolant distribution sleeve and the second stator are rotationally fixed with respect to one another via the second tangential locking feature and the tangential counter-locking feature of the second stator. This means that there are three alternatives. In the first alternative, the coolant distribution sleeve comprises the first tangential locking feature and the first stator comprises the tangential counter-locking feature, wherein the coolant distribution sleeve and the first stator are rotationally fixed with respect to one another via the first tangential locking feature and the tangential counter-locking feature of the first stator. In the second alternative, the coolant distribution sleeve comprises the second tangential locking feature and the second stator comprises the tangential counter-locking feature, wherein the coolant distribution sleeve and the second stator are rotationally fixed with respect to one another via the second tangential locking feature and the tangential counter-locking feature of the second stator. In the third alternative, the coolant distribution sleeve comprises the first tangential locking feature and the first stator comprises the tangential counter-locking feature, wherein the coolant distribution sleeve and the first stator are rotationally fixed with respect to one another via the first tangential locking feature and the tangential counter-locking feature of the first stator, and the coolant distribution sleeve further comprises the second tangential locking feature and the second stator comprises the tangential counter-locking feature, wherein the coolant distribution sleeve and the second stator are rotationally fixed with respect to one another via the second tangential locking feature and the tangential counter-locking feature of the second stator. In this context, the locking feature and the associated counter-locking feature may form a positive locking. The use of the first tangential locking feature and/or the second tangential locking feature of the coolant distribution sleeve in combination with the respectively associated tangential counter-locking feature of the first stator or the second stator has the effect that a relative rotation is blocked. This leads to an enhanced structural stability of the stator assembly. Moreover, this facilitates precise positioning of the coolant channels.

According to an example, the first tangential locking feature or the tangential counter-locking feature of the first stator comprises a bolt extending in parallel to the first axis. Additionally or alternatively, the second tangential locking feature or the tangential counter-locking feature of the second stator comprises a bolt extending in parallel to the first axis. This means that there are three alternatives. In the first alternative, the first tangential locking feature or the tangential counter-locking feature of the first stator comprises the bolt extending in parallel to the first axis. In the second alternative the second tangential locking feature or the tangential counter-locking feature of the second stator comprises the bolt extending in parallel to the first axis. In the third alternative, the first tangential locking feature or the tangential counter-locking feature of the first stator comprises the bolt extending in parallel to the first axis, and the second tangential locking feature or the tangential counter-locking feature of the second stator comprises the bolt extending in parallel to the first axis. It is noted that in the latter case, at least two bolts may be involved. The use of the bolt extending in parallel to the first axis may allow increasing the structural stability of the stator assembly by further enhancing the securing of the rotational fixation of the coolant distribution sleeve and the first stator and/or the coolant distribution sleeve and the second stator with respect to one another.

In an example, the at least one bolt extending in parallel to the first axis comprises non-ferromagnetic material or is made from a non-ferromagnetic material. Such material may be aluminum and/or titanium. Thus, the coolant distribution sleeve does not interact with magnetic fields that may be generated by the first stator and/or the second stator. This implies that the coolant distribution sleeve does not cause any magnetic losses.

According to an example, a radial inner surface of the first stator and/or a radial outer surface of the second stator comprises an electrically insulative coating. This means that there are three alternatives. In the first alternative, the radial inner surface of the first stator comprises the electrically insulative coating. In the second alternative, the radial outer surface of the second stator comprises the electrically insulative coating. In the third alternative, the radial inner surface of the first stator and the radial outer surface of the second stator comprise the electrically insulative coating. The electrically insulative coating may prevent direct electrical contact between different parts of the first stator and/or the second stator and other components. This may reduce the risk of an undesired electric short circuit. As a consequence, the overall reliability of the stator assembly may be further increased. It is noted that the electrically insulative coating may comprise a good thermal conductivity to withstand high temperatures by distributing the heat effectively.

According to a second aspect, there is provided a dual rotor electric machine for a drive unit of a vehicle. The dual rotor electric machine comprises a stator assembly according to the first aspect. The dual rotor assembly further comprises a first rotor associated with the first stator and arranged radially adjacent to the first stator, and a second rotor associated with the second stator and arranged radially adjacent to the second stator. In this context, the rotors may be understood as the rotating members of the electric machine. Thus, the first rotor may rotate because of a magnetic interaction with the first stator. The second rotor may rotate because of a magnetic interaction with the second stator. As has been mentioned before, due to the cooling, the stator assembly may be operated at a comparatively high performance. Thus, the use of the plurality of coolant channels may lead to a higher achievable torque and power density of the stator assembly and, thus, of the dual rotor electric machine using the stator assembly. Thus, the dual rotor electric machine may be cost efficient because no further components may be needed to increase the torque and power density, while using the compact design of the dual rotor electric machine. Further, as mentioned above, the stator assembly includes features that may allow improving the performance while reducing the risk of overheating of the stator assembly due to an improved cooling, these characteristics are also applicable to the dual rotor electric machine for the drive unit of the vehicle.

According to a third aspect, there is provided a coolant distribution sleeve for a stator assembly of the first aspect. The coolant distribution sleeve comprises a ring-shaped body member. A radial outer side of the ring-shaped body member is configured to form a first group of coolant channels together with the first stator. Additionally or alternatively, a radial inner side of the ring-shaped body member is configured to form a second group of coolant channels together with the second stator. This means that there are three alternatives. In the first alternative, the radial outer side of the ring-shaped body member is configured to form a first group of coolant channels together with the first stator. In the second alternative, the radial inner side of the ring-shaped body member is configured to form a second group of coolant channels together with the second stator. In the third alternative, the radial outer side of the ring-shaped body member is configured to form a first group of coolant channels together with the first stator, and the radial inner side of the ring-shaped body member is configured to form a second group of coolant channels together with the second stator. Such a coolant distribution sleeve allows to provide coolant channels in a simple and reliable manner. This allows for efficient and reliable cooling of a stator assembly using the coolant distribution sleeve. As has been mentioned before, due to the cooling, the stator assembly may be operated at a comparatively high performance. Thus, the use of the plurality of coolant channels may lead to a higher achievable torque and power density of the stator assembly and, thus, of the dual rotor electric machine using the stator assembly. Thus, the dual rotor electric machine may be cost efficient because no further components may be needed to increase the torque and power density, while using the compact design of the dual rotor electric machine. Further, as mentioned above, the stator assembly includes features that may allow improving the performance while reducing the risk of overheating of the stator assembly due to an improved cooling, these characteristics are also applicable to the coolant distribution sleeve for a stator assembly of the first aspect.

According to an example, the coolant distribution sleeve comprises a plurality of grooves provided on the radial outer side of the ring-shaped body member, extending axially, and forming the coolant channels of the first group of coolant channels. Additionally or alternatively, the coolant distribution sleeve comprises a plurality of grooves provided on the radial inner side of the ring-shaped body member, extending axially, and forming the coolant channels of the second group of coolant channels. This means that there are three alternatives. In the first alternative, the coolant distribution sleeve comprises a plurality of grooves provided on the radial outer side of the ring-shaped body member, extending axially, and forming the coolant channels of the first group of coolant channels. In the second alternative, the coolant distribution sleeve comprises a plurality of grooves provided on the radial inner side of the ring-shaped body member, extending axially, and forming the coolant channels of the second group of coolant channels. In the third alternative, the coolant distribution sleeve comprises a plurality of grooves provided on the radial outer side of the ring-shaped body member, extending axially, and forming the coolant channels of the first group of coolant channels, and the coolant distribution sleeve further comprises a plurality of grooves provided on the radial inner side of the ring-shaped body member, extending axially, and forming the coolant channels of the second group of coolant channels. As mentioned above, it is noted that the grooves may be at least partially evenly or unevenly distributed over a circumference of the coolant distribution sleeve. The plurality of grooves provided on the radial outer side of the coolant distribution sleeve may allow coolant to flow efficiently over the outer side of the coolant distribution sleeve. The plurality of grooves provided on the radial inner side of the coolant distribution sleeve may allow coolant to flow efficiently over the inner side of the coolant distribution sleeve. The plurality of grooves provided on the radial outer and/or inner side of the coolant distribution sleeve may lead to an improved coolant circulation. This is because the plurality of grooves may be seen as a predefined guidance for the coolant through the grooves on the radial outer side and/or on the radial inner side. This may enable a more uniform and more efficient cooling. At the same time, such grooves are simple from a structural point of view and from a manufacturing point of view.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: schematically shows a vehicle comprising a dual rotor electric machine according to the present disclosure, wherein the dual rotor electric machine includes a stator assembly according to the present disclosure comprising a coolant distribution sleeve according to the present disclosure,
- Figure 2: shows the vehicle of Figure 1 in a schematic bottom view,
- Figure 3: schematically shows one of the dual rotor electric machines of Figures 1 and 2 in a sectional view along plane III-III of Figure 4, and
- Figure 4: schematically shows the dual rotor electric machine of Figure 3 in a sectional view along plane IV-IV of Figure 3,
- Figure 5: shows the stator assembly of the dual rotor electric machine of Figures 3 and 4 in a more detailed, exploded, perspective view,
- Figure 6: shows the stator assembly of Figures 3 to 5 in a more detailed, partially exploded view corresponding to a view along direction VI of Figure 3,
- Figure 7: shows the stator assembly of Figures 3 to 6 in a detailed view corresponding to a sectional view along plane VII of Figure 4,
- Figure 8: shows a detail VIII of the stator assembly of Figure 7,
- Figure 9: shows the stator assembly of Figures 3 to 8 in a detailed view corresponding to a view onto plane IX of Figure 4,

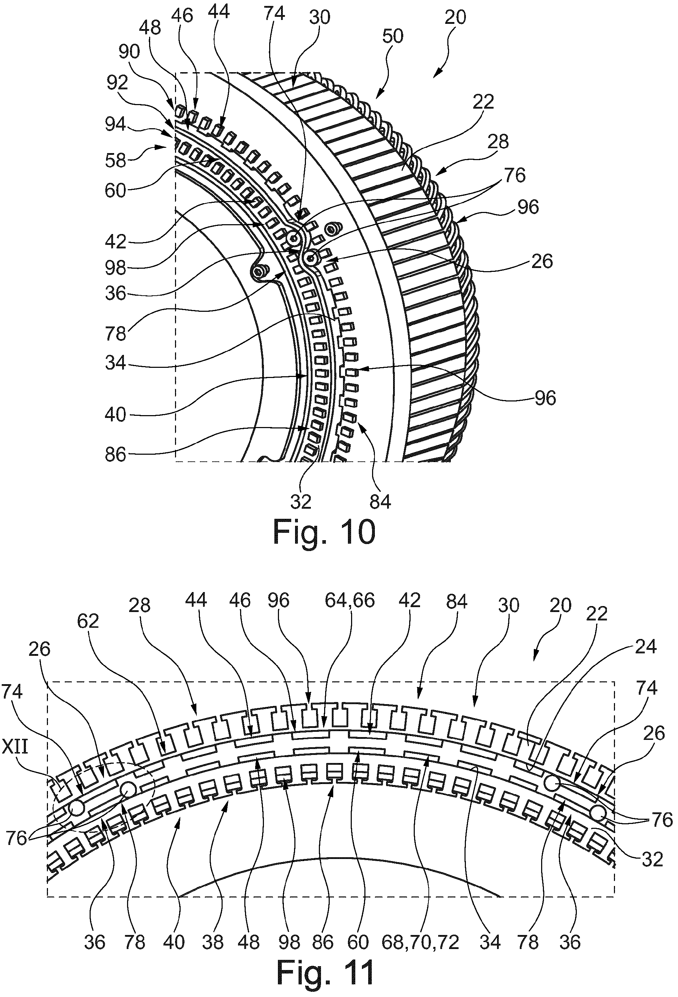

- Figure 10: shows the stator assembly of Figures 3 to 9 in a detailed view corresponding to a view along direction X of Figure 4,
- Figure 11: shows the stator assembly of Figures 3 to 10 in a detailed sectional view along plane XI of Figure 6,
- Figure 12: shows a detail XII of the stator assembly of Figure 11,
- Figure 13: shows a detail XIII of a first stator of the dual rotor electric machine of Figure 5, and

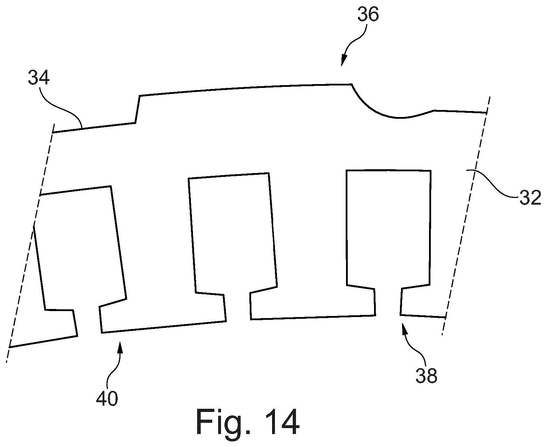

- Figure 14: shows a detail XIV of a second stator of the dual rotor electric machine of Figure 5.

### DETAILED DESCRIPTION

The Figures are merely schematic representations and serve only to illustrate examples of the disclosure. Identical or equivalent elements are in principle provided with the same reference signs.

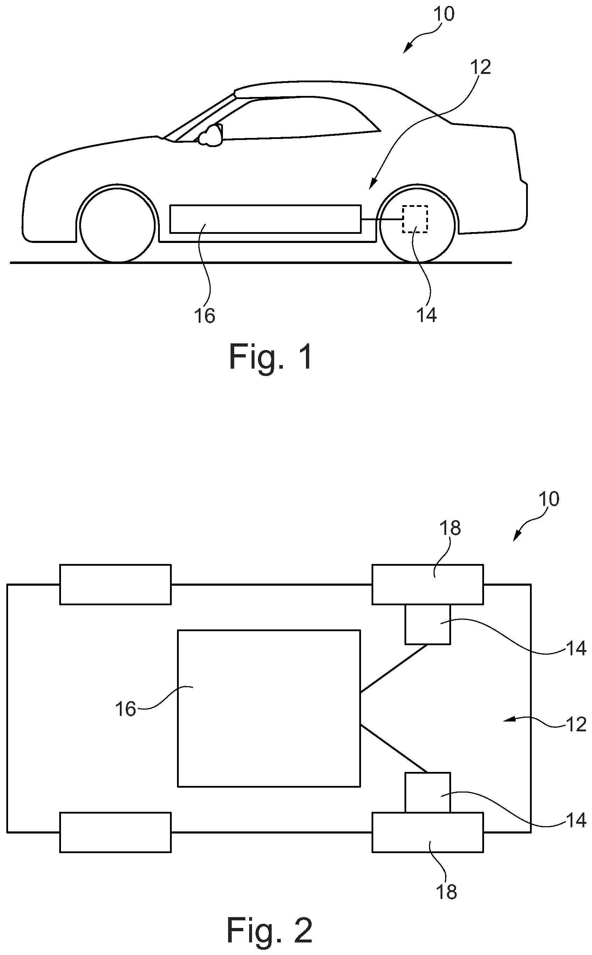

Figure 1 shows a vehicle 10 that comprises a drive unit 12, which may also be called a drivetrain.

In the present example, the drive unit 12 includes two dual rotor electric machines 14 (see Figure 2), wherein a battery assembly 16 stores and provides electric energy for powering the two dual rotor electric machine 14. Thus, in the present example, the vehicle 10 is a battery electric vehicle.

In the present example, the two dual rotor electric machine 14 are two dual rotor surface permanent magnet machines.

Each dual rotor electric machine 14 is installed as wheel hub motor for rotating an associated rear wheel 18 to drive the vehicle 10.

Thus, in the present example, the vehicle 10 has a rear-wheel drive.

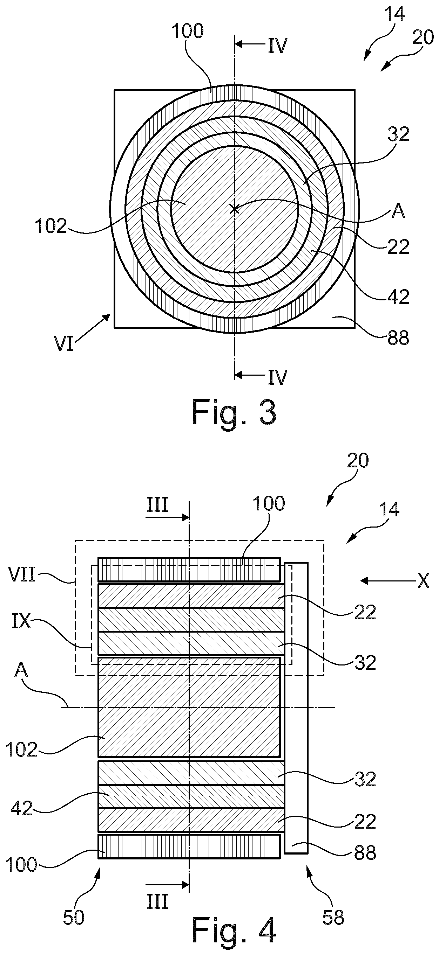

Each dual rotor electric machine 14 comprises a stator assembly 20 (see schematic representations in Figures 3 and 4).

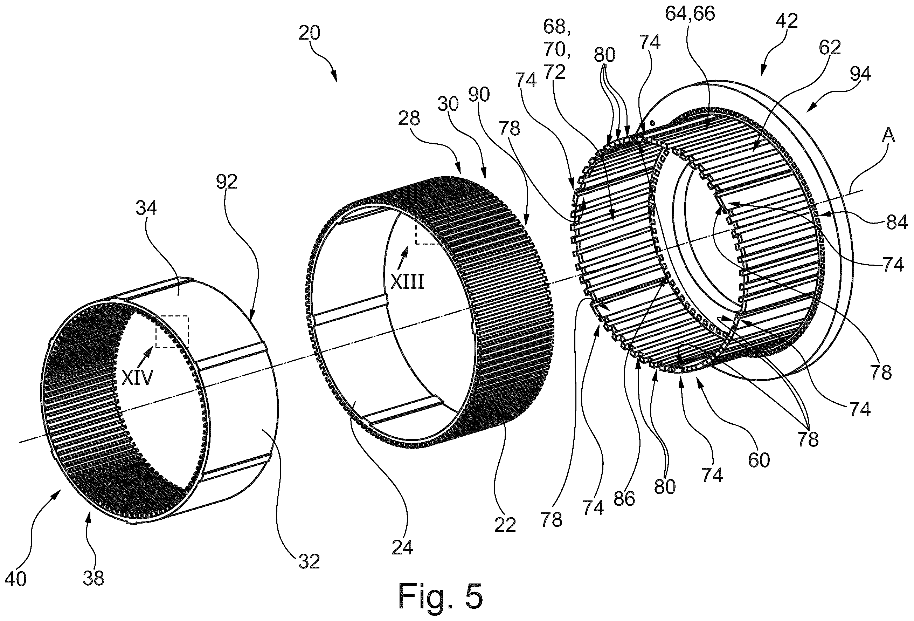

The stator assembly 20 comprises a first stator 22. The first stator 22 extends along a first axis A (see Figures 3 to 5).

The first stator 22 further comprises a plurality of stator slots 28 on a radial outer surface 30 of the first stator 22. The stator slots 28 are configured for receiving a stator winding 96 of the first stator 22.

The stator assembly 20 further comprises a second stator 32. The second stator 32 extends along the first axis A.

The second stator 32 further comprises a plurality of stator slots 38 on a radial inner surface 40 of the second stator 32. The stator slots 28 are configured for receiving a stator winding 98 of the second stator 32.

The second stator 32 is arranged radially inside the first stator 22.

Moreover, the first stator 22 and the second stator 32 are arranged coaxially.

This means that the first stator 22 may be seen as the radially outer stator and the second stator 32 may be seen as the radially inner stator.

Each dual rotor electric machine 14 further comprises a first rotor 100.

The first rotor 100 is associated with the first stator 22 and arranged radially adjacent to the first stator 22. In the present example, the first rotor 100 is ring-shaped and comprises a plurality of permanent magnets.

Each dual rotor electric machine 14 further comprises a second rotor 102.

The second rotor 102 is associated with the second stator 32 and arranged radially adjacent to the second stator 32. In the present example, the second rotor 102 is ring-shaped and comprises a plurality of permanent magnets.

Since the first rotor 100 is located radially outside with respect to the second rotor 102, the first rotor 100 may be designated as a radially outer rotor and the second rotor 102 may be designated as a radially inner rotor.

It is noted that even though each dual rotor electric machine 14 comprises two rotors, i.e. the first rotor 100 and the second rotor 102, it is possible that both the first rotor 100 and the second rotor 102 are used for driving the same component, e.g. by being coupled to and by acting on the same flange. In the present example, both rotors of one dual rotor electric machine 14 are coupled to the same wheel 18 and may be used for driving this wheel 18.

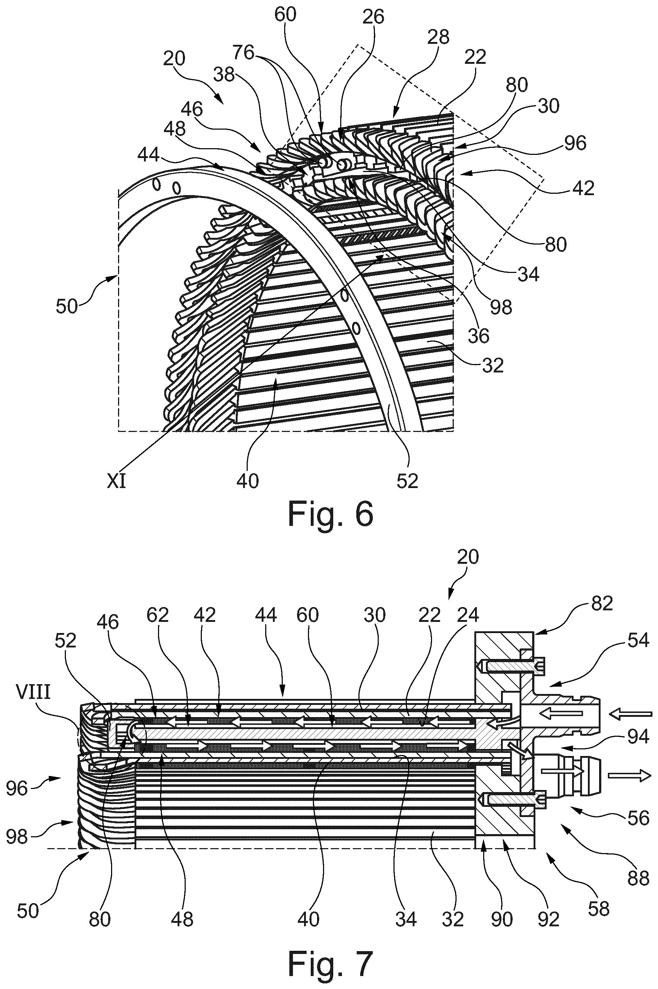

Each dual rotor electric machine 14 further comprises a coolant distribution sleeve 42 (see Figures 3, 4 and also Figure 7).

The coolant distribution sleeve 42 comprises a ring-shaped body member 60.

A radial outer side 62 of the ring-shaped body member 60 is configured to form a first group of coolant channels 46 together with the first stator 22.

In the present example, the first group of coolant channels 46 is formed by the coolant distribution sleeve 42 and the first stator 22.

In more detail, the coolant distribution sleeve 42 comprises a plurality of grooves 64 provided on a radial outer side 66 of the coolant distribution sleeve 42.

The plurality of grooves 64 extend axially and form the coolant channels of the first group of coolant channels 46.

It is noted that the plurality of grooves 64 are substantially evenly distributed over a circumference of the coolant distribution sleeve 42.

A radial inner side 68 of the ring-shaped body member 60 is configured to form a second group of coolant channels 48 together with the second stator 32.

In the present example, the second group of coolant channels 48 is formed by the coolant distribution sleeve 42 and the second stator 32.

Further, the coolant distribution sleeve 42 comprises a plurality of grooves 70 provided on a radial inner side 72 of the coolant distribution sleeve 42.

The plurality of grooves 70 extend axially and form the coolant channels of the second group of coolant channels 48.

It is noted that the plurality of grooves 70 are substantially evenly distributed over a circumference of the coolant distribution sleeve 42.

It is noted that all coolant channels 44 extend along the first axis A.

Moreover, in the assembled state of the stator assembly 20, the plurality of coolant channels 44 are interposed between the first stator 22 and the second stator 32.

In more detail, the first group of coolant channels 46 out of the plurality of coolant channels 44 is arranged radially outside the second group of coolant channels 48 out of the plurality of coolant channels 44.

The coolant channels of the first group 46 and the coolant channels of the second group 48 are pair-wise fluidically connected at a first axial end 50.

To this end, the coolant distribution sleeve 42 further comprises a plurality of radial channel segments 80.

Each radial channel segment 80 of the plurality of radial channel segments 80 is fluidically interconnecting a coolant channel of the first group of coolant channels 46 and a radially adjacent coolant channel of the second group of coolant channels 48.

In the present example, the radial channel segments 80 are formed as notches or grooves extending radially at the first axial end 50 of the coolant distribution sleeve 42.

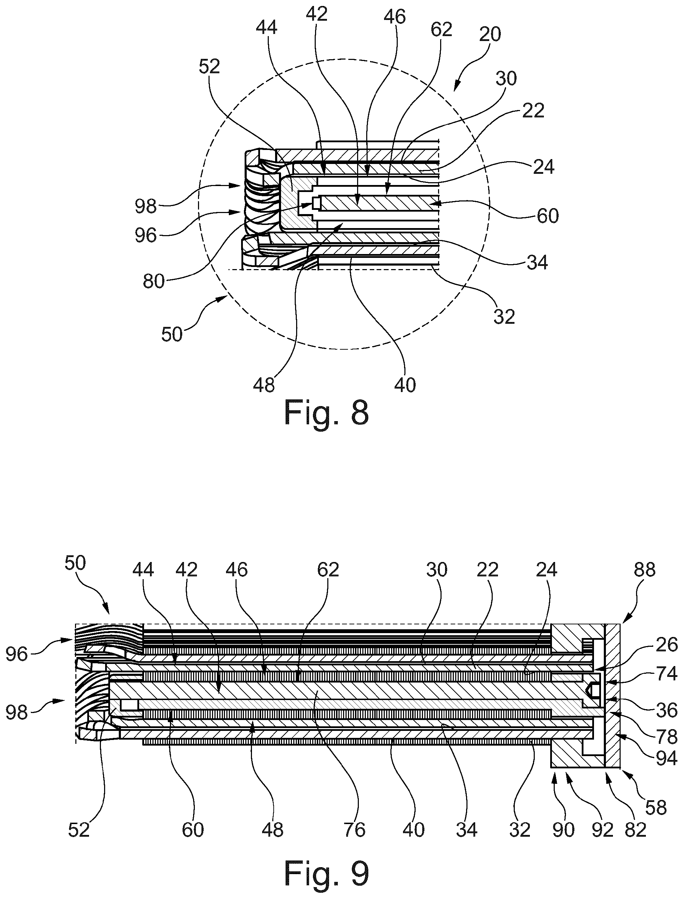

The stator assembly 20 further comprises a ring-shaped end piece 52 (see also Figure 8).

The ring-shaped end piece 52 is radially interposed between the first stator 22 and the second stator 32 at the first axial end 50 of the first stator 22 and the second stator 32.

Additionally, the ring-shaped end piece 52 is axially delimiting the plurality of coolant channels 44. To this end, the ring-shaped end piece 52 is arranged axially adjacent to the coolant distribution sleeve 42, thereby delimiting the radial channel segments 80 and, thus, enabling the pair-wise fluidic connection between the first group of the coolant channels 46 and the second group of the coolant channels 48 at the first axial end 50.

In simplified words, due to the radial channel segments 80 and the ring-shaped end piece 52, coolant may flow from a coolant channel forming part of the first group of the coolant channels 46 into a coolant channel forming part of the second group of the coolant channels 48 and vice versa.

The stator assembly 20 further comprises a coolant inlet port 54 and a coolant outlet port 56 (see Figure 7).

The coolant inlet port 54 is fluidically connected to the first group of coolant channels 46 and the coolant outlet port 56 is fluidically connected to the second group of coolant channels 48.

This means that the coolant channels of the first group 46 and the coolant channels of the second group 48 are fluidically coupled to a respectively associated port at a second axial end 58.

It is noted that the second axial end 58 is opposite to the first axial end 50.

Consequently, coolant provided at the coolant inlet port 54 may flow through the coolant channels of the first group 46 first and then through the coolant channels of the second group 48. Thereafter, the coolant may be discharged at the coolant outlet port 56.

The coolant distribution sleeve 42 further comprises a first tangential locking feature 74.

In more detail, the coolant distribution sleeve 42 and the first stator 22 are rotationally fixed with respect to one another via the first tangential locking feature 74 and the tangential counter-locking feature 26 of the first stator 22.

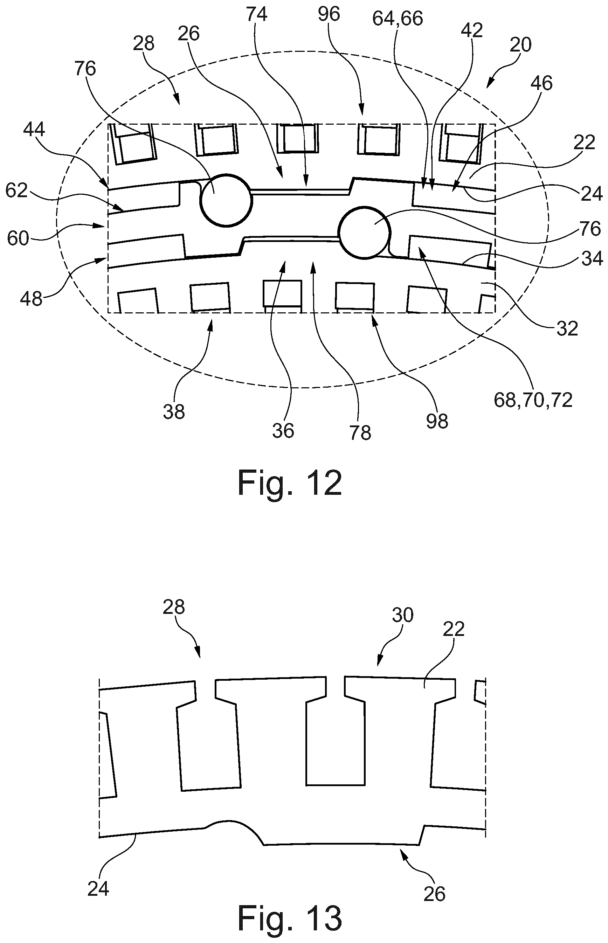

The first tangential locking feature 74 comprises a bolt 76 extending in parallel to the first axis A (see also Figure 9 and 12).

In the present example, the bolt 76 is made of non-ferromagnetic material. In more detail, the bolt 76 is made of aluminum.

Moreover, the bolt 76 extends through a channel which is partly formed by the first stator 22 and partly by the coolant distribution sleeve 42. More precisely, at least at one location, a circumference of this channel is partly formed by the first stator 22 and partly by the coolant distribution sleeve 42. By arranging the bolt 76 in this channel, a relative rotation is blocked at least in one circumferential direction. The relative rotation is also blocked in an opposite circumferential direction in that a stepped portion of the first stator 22 abuts against a stepped counter-portion of the coolant distribution sleeve 42.

The coolant distribution sleeve 42 further comprises a second tangential locking feature 78.

In more detail, the coolant distribution sleeve 42 and the second stator 32 are rotationally fixed with respect to one another via the second tangential locking feature 78 and the tangential counter-locking feature 36 of the second stator 32.

The second tangential locking feature 78 comprises a bolt 76 extending in parallel to the first axis A.

In the present example, the bolt 76 is made of non-ferromagnetic material. In more detail, the bolt 76 is made of aluminum.

Moreover, the bolt 76 extends through a channel which is partly formed by the second stator 32 and partly by the coolant distribution sleeve 42. More precisely, at least at one location, a circumference of this channel is partly formed by the second stator 32 and partly by the coolant distribution sleeve 42. By arranging the bolt 76 in this channel, a relative rotation is blocked at least in one circumferential direction. The relative rotation is also blocked in an opposite circumferential direction in that a stepped portion of the second stator 32 abuts against a stepped counter-portion of the coolant distribution sleeve 42.

Consequently, due to the fact that both the first stator 22 and the second stator 32 are rotationally fixed with respect to the coolant distribution sleeve 42, also the first stator 22 and the second stator 32 are rotationally fixed with respect to one another.

In the present example, the coolant distribution sleeve 42 further comprises a connection interface 82.

The connection interface 82 comprises a plurality of holes 84 provided adjacent to the radial outer side 62 of the ring-shaped body member 60 and extending axially along the first axis A.

The connection interface 82 further comprises a plurality of holes 86 provided adjacent to the radial inner side 68 of the ring-shaped body member 60 and extending axially along the first axis A.

In the present example, the coolant distribution sleeve 42 is made of non-ferromagnetic material. In more detail, the coolant distribution sleeve 42 is made of aluminum.

In the present example, each dual rotor electric machine 14 further comprises a support part 88 (see in particular Figures 3 and 4).

A second axial end 90 of the first stator 22, a second axial end 92 of the second stator 32 and a second axial end 94 of the coolant distribution sleeve 42 are mechanically connected to the support part 88.

It is noted that the mechanical connection between the second axial end 92 of the second stator 32, the second axial end 94 of the coolant distribution sleeve 42 and the support part 88 is fluid-tight.

In the present example, the mechanical connection is achieved using eight bolts equally distributed along the ring-shaped body member 60.

Furthermore, a radial inner surface 24 of the first stator 22 comprises an electrically insulative coating.

In the same manner, a radial outer surface 34 of the second stator 32 comprises an electrically insulative coating.

Altogether, in order to cool the first rotor 100, the second rotor 102, the first stator 22, and/or the second stator 32, a coolant may flow through the plurality of coolant channels 44 of both the first group of coolant channels 46 and the second group of coolant channels 48. The flow of the coolant is schematically shown in Figure 7.

In the present example, the coolant is a fluid.

In more detail, the coolant enters the dual rotor electric machine 14 via the coolant inlet port 54.

The coolant flows through the first group of coolant channels 46 into the second group of coolant channels 48 via the plurality of radial channel segments delimited by the ring-shaped end piece 52, achieving a cooling effect of the first rotor 100, the second rotor 102, the first stator 22, and/or the second stator 32.

The coolant exits the dual rotor electric machine 14 via the coolant outlet port 56.

With respect to Figure 3 and Figure 4, it is noted that the hatching indicating the sectional views do only serve for illustrative purposes to facilitate visual differentiation between the individual parts. In particular, the different hatchings do not indicate different materials.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 12: drive unit
- 14: dual rotor electric machine
- 16: battery assembly
- 18: rear wheel
- 20: stator assembly
- 22: first stator
- 24: radial inner surface of the first stator
- 26: tangential counter-locking feature of the first stator
- 28: plurality of stator slots of the first stator
- 30: radial outer surface of the first stator
- 32: second stator
- 34: radial outer surface of the second stator
- 36: tangential counter-locking feature of the second stator
- 38: plurality of stator slots of the second stator
- 40: radial inner surface of the second stator
- 42: coolant distribution sleeve
- 44: plurality of coolant channels
- 46: first group of coolant channels
- 48: second group of coolant channels
- 50: first axial end
- 52: ring-shaped end piece
- 54: coolant inlet port
- 56: coolant outlet port
- 58: second axial end
- 60: ring-shaped body member
- 62: radial outer side of the ring-shaped body member
- 64: plurality of grooves provided on a radial outer side of the coolant distribution sleeve
- 66: radial outer side of the coolant distribution sleeve
- 68: radial inner side of the ring-shaped body member
- 70: plurality of grooves provided on a radial inner side of the coolant distribution sleeve
- 72: radial inner side of the coolant distribution sleeve
- 74: first tangential locking feature
- 76: bolt
- 78: second tangential locking feature
- 80: plurality of radial channel segments
- 82: connection interface
- 84: plurality of holes provided in the radial outer side of the ring-shaped body member
- 86: plurality of holes provided in the radial inner side of the ring-shaped body member
- 88: support part
- 90: second axial end of the first stator
- 92: second axial end of the second stator
- 94: second axial end of the coolant distribution sleeve
- 96: stator winding of first stator
- 98: stator winding of second stator
- 100: first rotor
- 102: second rotor

- A: first axis

## Claims

1. A stator assembly (20) for a dual rotor electric machine (14) for a drive unit (12) of a vehicle (10), the stator assembly (20) comprising a first stator (22) extending along a first axis (A) and a second stator (32) extending along the first axis (A),
wherein the second stator (32) is arranged radially inside the first stator (22) and wherein the first stator (22) and the second stator (32) are rotationally fixed with respect to one another, and
wherein a plurality of coolant channels (44) extending along the first axis (A) are interposed between the first stator (22) and the second stator (32).

2. The stator assembly (20) of claim 1, wherein a first group of coolant channels (46) out of the plurality of coolant channels (44) is arranged radially outside a second group of coolant channels (48) out of the plurality of coolant channels (44).

3. The stator assembly (20) of claim 2, wherein the coolant channels of the first group (46) and the coolant channels of the second group (48) are at least pair-wise fluidically connected at a first axial end (50) and fluidically coupled to a respectively associated port at a second axial end (58), wherein the second axial end (58) is opposite to the first axial end (50).

4. The stator assembly (20) of claim 3, further comprising a ring-shaped end piece (52) radially interposed between the first stator (22) and the second stator (32) at the first axial end (50) of the first stator (22) and the second stator (32) and axially delimiting the plurality of coolant channels (44).

5. The stator assembly (20) of claim 3 or 4, further comprising a coolant inlet port (54) fluidically connected to the first group of coolant channels (46) and a coolant outlet port (56) fluidically connected to the second group of coolant channels (48).

6. The stator assembly (20) of any one of claims 3 to 5, wherein a second axial end (90) of the first stator (22) and a second axial end (92) of the second stator (32) are mechanically connected to a support part (88).

7. The stator assembly (20) of any one of claims 2 to 6, wherein the first group of coolant channels (46) is formed by a coolant distribution sleeve (42) and the first stator (22), and/or
wherein the second group of coolant channels (48) is formed by the coolant distribution sleeve (42) and the second stator (32).

8. The stator assembly (20) of claim 7,
wherein the coolant distribution sleeve (42) comprises a plurality of grooves (64) provided on a radial outer side (66) of the coolant distribution sleeve (42), extending axially, and forming the coolant channels of the first group of coolant channels (46), and/or
wherein the coolant distribution sleeve (42) comprises a plurality of grooves (70) provided on a radial inner side (72) of the coolant distribution sleeve (42), extending axially, and forming the coolant channels of the second group of coolant channels (48).

9. The stator assembly (20) of claim 7 or 8, wherein the coolant distribution sleeve (42) comprises a plurality of radial channel segments (80), each radial channel segment fluidically interconnecting a coolant channel of the first group of coolant channels (46) and a radially adjacent coolant channel of the second group of coolant channels (48).

10. The stator assembly (20) of any one of claims 7 to 9, wherein the coolant distribution sleeve (42) comprises a first tangential locking feature (74) and the first stator (22) comprises a tangential counter-locking feature (26), wherein the coolant distribution sleeve (42) and the first stator (22) are rotationally fixed with respect to one another via the first tangential locking feature (74) and the tangential counter-locking feature (26) of the first stator (22), and/or
wherein the coolant distribution sleeve (42) comprises a second tangential locking feature (78) and the second stator (32) comprises a tangential counter-locking feature (36), wherein the coolant distribution sleeve (42) and the second stator (32) are rotationally fixed with respect to one another via the second tangential locking feature (78) and the tangential counter-locking feature (36) of the second stator (32).

11. The stator assembly (20) of claim 10, wherein the first tangential locking feature (74) or the tangential counter-locking feature (26) of the first stator (22) comprises a bolt (76) extending in parallel to the first axis (A), and/or
wherein the second tangential locking feature (78) or the tangential counter-locking feature (36) of the second stator (32) comprises a bolt (76) extending in parallel to the first axis (A).

12. The stator assembly (20) of any one of the preceding claims, wherein a radial inner surface (24) of the first stator (22) and/or a radial outer surface (34) of the second stator (32) comprises an electrically insulative coating.

13. A dual rotor electric machine (14) for a drive unit (12) of a vehicle (10), comprising
a stator assembly (20) according to any one of the preceding claims,
a first rotor (100) associated with the first stator (22) and arranged radially adjacent to the first stator (22), and
a second rotor (102) associated with the second stator (32) and arranged radially adjacent to the second stator (32).

14. A coolant distribution sleeve (42) for a stator assembly (20) of any one of claims 1 to 12, the coolant distribution sleeve (42) comprising a ring-shaped body member (60), wherein a radial outer side (62) of the ring-shaped body member (60) is configured to form a first group of coolant channels (46) together with the first stator (22), and/or wherein a radial inner side (68) of the ring-shaped body member (60) is configured to form a second group of coolant channels (48) together with the second stator (32).

15. The coolant distribution sleeve (42) of claim 14,
wherein the coolant distribution sleeve (42) comprises a plurality of grooves provided on the radial outer side (62) of the ring-shaped body member (60), extending axially, and forming the coolant channels of the first group of coolant channels (46), and/or wherein the coolant distribution sleeve (42) comprises a plurality of grooves provided on the radial inner side (68) of the ring-shaped body member (60), extending axially, and forming the coolant channels of the second group of coolant channels (48).
